# DEMANDE DE BREVET EUROPEEN

(11) **EP 1 944 180 A1**
(43) Date de publication de la demande: **16.07.2008**
(21) Numéro de dépôt: 08350001.7
(22) Date de dépôt: 04.01.2008
(51) Int. Cl.: B60J 7/14

(54) **Méchanisme de déplacement d'un toit mobile**

(30) Priorité: 10.01.2007 FR 0700161
(71) Demandeur: Heuliez, 79140 Cerizay (FR)
(72) Inventeur: Quéveau, Paul, 79140 Montravers (FR); Quéveau, Gérard, 79140 Le Pin (FR); Guillez, Jean-Marc, 79140 Cirières (FR)
(74) Mandataire: Tournel, Jean Louis

(57) **Abrégé**

L'invention a pour objet un mécanisme de déplacement (10) d'un toit vers une zone de rangement située à l'arrière le dit mécanisme reliant une partie arrière du toit mobile au châssis, ce mécanisme étant caractérisé en ce qu'il comprend en combinaison un premier moyen (11) de guidage agissant sur un organe (12) avant situé sur la partie (2B) arrière du toit et un second moyen (13) de guidage agissant sur un organe (14) arrière situé sur la partie (2B) arrière du toit en arrière de l'organe (12) dit avant, les dits moyens (11 et 13) de guidage étant disposés et/ou constitués pour que lors du mouvement de rangement le début du mouvement du toit est un abaissement rapide de l'arrière dudit toit avec un faible recul du toit et la fin du mouvement se traduit par une remontée rapide de l'arrière avec un faible recul du toit.

## Description

L'invention se rapporte à un mécanisme de déplacement d'un toit mobile.

Elle se rapporte également au toit mobile pourvu dudit mécanisme.

Pour la manoeuvre d'un toit mobile, on peut faire appel à un mécanisme qui va non seulement permettre de contracter le toit mais également le déplacer pour le ranger dans un compartiment ou bien, à deux mécanismes distincts, l'un pour contracter le toit et l'autre pour le déplacer.

Dans le cas présent, on se réfère à un mécanisme destiné uniquement à déplacer le toit vers sa zone de rangement étant entendu qu'un second mécanisme permet de contracter le toit mobile qui se présente en au moins deux parties, une partie avant et une partie arrière et éventuellement une partie centrale.

Il peut être prévu des moyens de synchronisation des mécanismes qui peuvent être mécaniques ou électroniques.

La première difficulté est de déplacer le toit sans que cela interfère ni avec les passagers arrières, ni avec un obstacle tel qu'un plafond de garage.

On connait un toit GB 2240519 où le toit est guidé par deux pions ( avant et arrière) glissant chacun dans une glissière. Ces glissières sont conformés pour que la fin du mouvement du toit se traduise par un faible déplacement vertical mais un recul important. Il est fait appel à des glissières qui peuvent provoquer un coincement du fait des quatre points de guidage. Il faut agir sur le toit.

L'invention a pour but de proposer une solution permettant d'optimiser les mouvements du toit grâce a des moyens simples et fiables.

A cet effet, l'invention se rapporte à un mécanisme de déplacement d'un toit vers une zone de rangement située à l'arrière le dit mécanisme reliant une partie arrière du toit mobile au châssis, ce mécanisme étant caractérisé en ce qu'il comprend en combinaison un premier moyen de guidage agissant sur un organe avant situé sur la partie arrière du toit et un second moyen de guidage agissant sur un organe arrière situé en arrière de l'organe dit avant, les dits moyens de guidage étant constitués pour que lors du mouvement de rangement, le début du mouvement du toit est un abaissement rapide de l'arrière dudit toit avec un faible recul du toit et la fin du mouvement se traduit par une remontée rapide de l'arrière avec un faible recul, la trajectoire de l'arrière étant un arc de cercle.

L'invention sera bien comprise à l'aide de la description ci après faite à titre d'exemple non limitatif en regard du dessin qui représente schématiquement
FIG 1 un véhicule avec un toit mobile en vue de dessus et de trois quarts arrière comportant une lunette arrière mobile
FIG 2 Vue du mécanisme de déplacement du toit du véhicule de la figure 1
FIG 3 : un véhicule avec un toit mobile comprenant une lunette arrière solidaire du toit sous un angle similaire à celui de la figure 1
FIG 4 : Vue du mécanisme de déplacement du toit du véhicule de la figure 3.

En se reportant au dessin, on voit un véhicule 1 comportant un toit mobile 2 mobile entre une position de couverture de l'habitacle et une position rangée dans un compartiment situé à l'arrière du véhicule.

Le toit mobile est au moins en deux parties, une partie 2A avant et une partie 2B arrière. Dans l'exemple représenté, il comporte en plus une partie 2C centrale.

Il pourrait s'agir de toits décrits dans la demande FR -A- 2.845.949. Le toit pourrait aussi comporter une ou plusieurs parties souples, en particulier la partie centrale 2C.

La partie avant peut être déplacée sur ou sous la partie 2B arrière à l'aide d'un mécanisme 3.

Il peut s'agir de bras articulés.

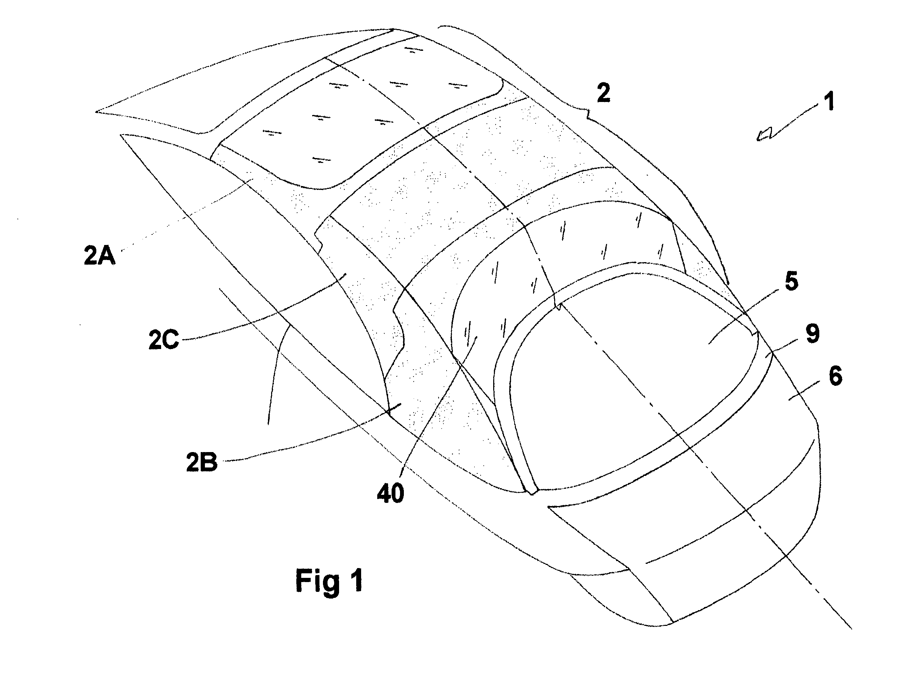

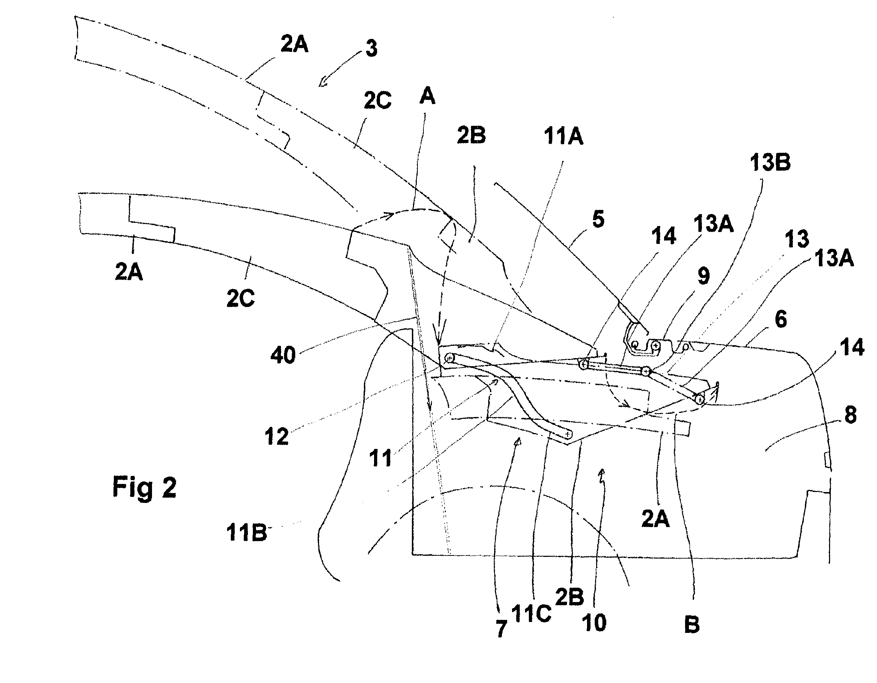

Comme on peut le voir, le véhicule de la figure 1 et 2 comporte un couvercle 5 pour fermer l'espace 7 de rangement, ce couvercle s'ouvrant de l'avant vers l'arrière. Il comporte un second couvercle 6 pour fermer une malle 8 arrière qui lui s'ouvre de l'arrière vers l'avant.

Ces deux couvercles sont articulés sur une traverse 9 commune.

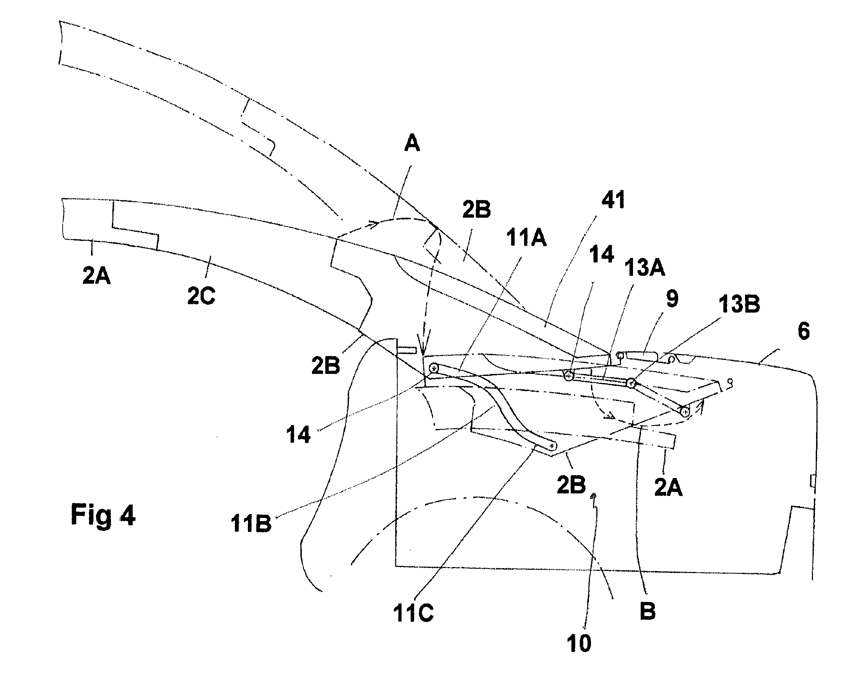

Le toit est déplacé dans sa position de rangement et inversement par un mécanisme 10 de déplacement qui déplace le toit vers sa position rangée qui est représenté en trait mixte sur les figures 2 ou 4. Lorsque le toit est rangé, la face externe de la partie arrière dudit toit reste tournée vers l'extérieur.

Dans la pratique le mécanisme de déplacement est constitué de deux mécanismes situés symétriquement sur les côtés latéraux du véhicule. Pour simplifier les explications il ne sera fait référence qu'à l'un de ces mécanismes.

Selon l'invention, le mécanisme 10 de déplacement comprend en combinaison un premier moyen 11 de guidage agissant sur un organe 12 avant situé sur la partie 2B arrière du toit et un second moyen 13 de guidage agissant sur un organe 14 arrière situé en arrière de l'organe 12 dit avant, les dits moyens 11 et 13 de guidage étant disposés et/ou constitués pour que lors du mouvement de rangement le début du mouvement du toit est un abaissement rapide de l'arrière dudit toit avec un faible recul du toit et la fin du mouvement se traduit par une remontée rapide avec un faible recul de l'arrière du toit. Lors du mouvement le toit effectue un mouvement de recul. Ce mouvement de recul est plus rapide dans une partie intermédiaire du mouvement située entre le début et la fin du mouvement.

L'organe 14 parcours un arc de cercle de rayon constant.

Plus précisément, le mouvement est le suivant: sous l'action d'un actionneur ( non représenté) agissant, de préférence, directement ou indirectement sur le deuxième moyen de guidage, on fait basculer rapidement vers le bas l'arrière de l'élément arrière de toit 2B qui pivote autour de l'organe 12 avant. Du fait de la disposition relative des moyens de guidage, le toit arrière recule faiblement au début du mouvement le temps que la partie avant du toit se lève pour contracter le toit (cf trait mixte sur les figures 2 et 4 ). Cela dégage l'espace au dessus des têtes et permet de replier la partie avant du toit sans gêner les occupants.

Lors de la progression vers l'arrière, l'organe 12 avant circule dans une première partie du mouvement sur une faible pente 11A puis dans une deuxième partie du mouvement sur une pente 11 B médiane plus prononcé de sorte qu'il va descendre plus rapidement que dans la première partie du mouvement vers l'arrière.

La troisième partie du mouvement comprend pour l'organe avant 12, une descente à faible pente 11C alors que l'organe arrière 14 effectue une remontée rapide.

On peut donc décomposer schématiquement le déplacement du toit en trois mouvements successif, le premier mouvement consistant en une descente rapide de l'organe arrière 14, un deuxième mouvement consistant en une accélération de la descente de l'organe avant 12, l'organe arrière ayant alors principalement un mouvement de recul et un troisième mouvement consistant en un ralentissement de la descente de l'organe avant et une remontée rapide de l'organe arrière toujours accompagné d'une translation vers l'arrière.

On a représenté par des traits interrompus le mouvement A du bord avant du toit arrière et le mouvement B du bord arrière du toit arrière.

L'une des solutions retenues consiste pour le premier moyen 11 de guidage en un guidage en translation grâce a un guide courbe dans lequel glisse l'organe 12 avant et pour le second moyen 13 de guidage en une biellette 13A pivotant autour d'un axe 13B fixe du châssis et en un axe 14 dit de guidage représentant l'organe arrière porté par le toit mobile, cet axe de guidage étant situé à l'arrière de l'organe avant précité qui glisse dans le guide courbe, de préférence dans une glissière.

Une liaison transverse mécanique ou hydraulique relie les biellettes ou les actionneurs des biellettes pour une parfaite symétrie du mouvement des biellettes ce qui évite la mise en crabe.

Le ou les actionneurs agissent directement sur les biellettes 13A ou sur une biellette accessoire ( non représentée) liée en rotation avec les biellettes 13A représentées.

Dans l'exemple représenté, le guide courbe comprend un point d'inflexion (c'est-à-dire un point où la courbure du guide change de sens : ce point se situe sur les figures à mi-distance entre les extrémités du guide 11). Selon la forme de la voiture et/ou du toit, le guide courbe peut avoir plus d'un point d'inflexion.

Plus précisément le guide courbe comprend un premier tronçon 11A à faible pente incliné vers l'arrière et vers le bas, un second tronçon 11B à pente plus accentuée vers le bas et l'arrière et un troisième tronçon 11C a pente faible inclinée vers le bas et l'arrière.

Pour ce qui concerne la disposition de la biellette 13A , en position du toit non rangé surplombant l'habitacle, la biellette est orientée vers l'avant depuis son axe 13B fixe et se trouve sensiblement à l'horizontal de sorte que sa rotation vers l'arrière va produire une descente rapide de l'organe arrière sans générer un recul rapide. Le mouvement de descente de l'organe 14 arrière ralenti progressivement jusqu'à ce que la biellette atteigne une orientation verticale pour ensuite remonter et accélérer à nouveau le mouvement d'ascension.

L'amplitude de la rotation de la biellette 13A est d'environ un demi-tour.

Ceci permet du fait de la position de l'axe fixe 13B au voisinage proche de la traverse 9 de contourner celle ci au plus près tout en limitant le débattement du toit à l'intérieur de l'espace de rangement 7 et de la malle 8.

La première partie du mouvement peut avantageusement être utilisée pour contracter la partie avant du toit en particulier grâce à des bras articulés à l'élément arrière 2B.

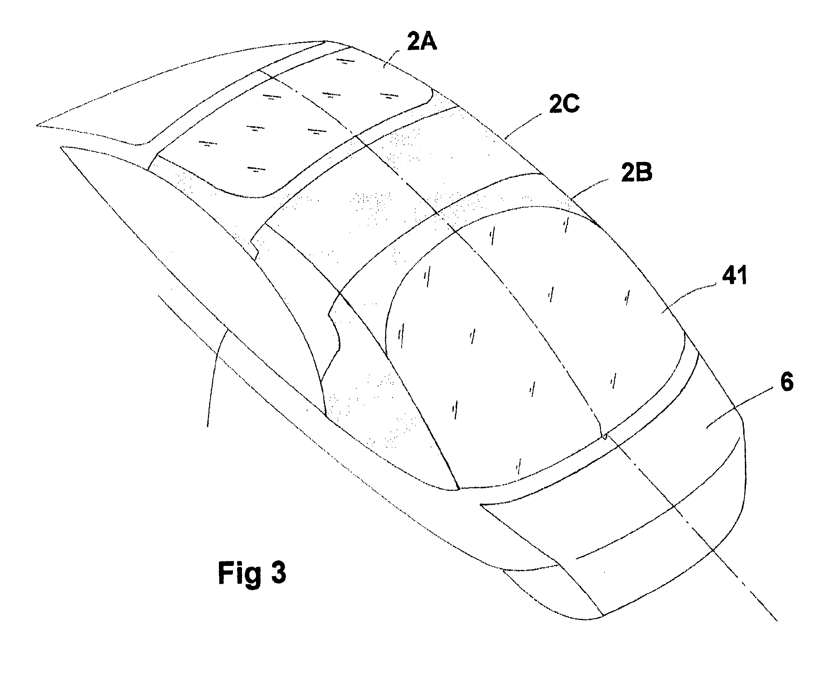

Cette solution s'applique sur un toit a lunette arrière escamotable 40 ( figure 1 et 2) ou sur un toit à lunette fixe 41 solidaire du toit mobile (figure 3 et 4). Les explications données en relation avec la figure 2 s'appliquent de la même façon aux toits à lunette fixe des figures 3 et 4. Dans ce dernier cas que le mécanisme de déplacement permet à la lunette 41 de passer au plus près de la traverse 9 tout en limitant les débattements du toit dans l'espace de rangement.

L'axe de pivot des biellettes est au voisinage proche de la traverse 9. On voit que dans la solution de la figure 4, il n'est pas nécessaire de prévoir la manoeuvre d'un couvercle de coffre pour ranger le toit.

Les solutions décrites ci-dessus permettent de limiter au maximum les débattements indésirables du toit, particulièrement dans la malle, tout en limitant les interférences potentielles (passagers,plafond).

## Revendications

1. Mécanisme de déplacement (10) d'un toit vers une zone de rangement située à l'arrière le dit mécanisme reliant une partie arrière du toit mobile au châssis, ce mécanisme étant **caractérisé en ce qu'**il comprend en combinaison un premier moyen (11) de guidage agissant sur un organe (12) avant situé sur la partie (2B) arrière du toit et un second moyen (13) de guidage agissant sur un organe (14) arrière situé sur la partie (2B) arrière du toit en arrière de l'organe (12) dit avant, les dits moyens (11 et 13) de guidage étant disposés et/ou constitués pour que lors du mouvement de rangement le début du mouvement du toit est un abaissement rapide de l'arrière dudit toit avec un faible recul du toit et la fin du mouvement se traduit par une remontée rapide de l'arrière avec un faible recul du toit, la trajectoire de l'arrière étant un arc de cercle.

2. Mécanisme de déplacement d'un toit selon la revendication 1 **caractérisé en ce que** le premier moyen (1) de guidage est un guide courbe dans lequel glisse l'organe (12) avant et le second moyen (13) de guidage est une biellette (13A) pivotant autour d'un axe (13B) fixe du châssis et en un axe (14) dit de guidage représentant l'organe arrière porté par le toit mobile, cet axe de guidage étant situé à l'arrière de l'organe avant précité.

3. Mécanisme de déplacement selon la revendication 1 ou 2 **caractérisé en ce qu'**il comprend des actionneurs agissant au moins indirectement sur les seconds moyens de guidage.

4. Mécanisme de déplacement selon la revendication 2 ou 3 **caractérisé en ce que** le guide courbe comprend au moins un point d'inflexion.

5. Mécanisme de déplacement d'un toit selon la revendication 2 ou 3 ou 4 **caractérisé en ce qu'**en position du toit non rangé surplombant l'habitacle, la biellette (13A) est orientée vers l'avant depuis son axe (13B) fixe et se trouve sensiblement à l'horizontal de sorte que sa rotation vers l'arrière autour de l'axe fixe (13B) produit une descente rapide de l'organe arrière sans générer un recul rapide.

6. Mécanisme de déplacement d'un toit selon la revendication 5 **caractérisé en ce que** l'amplitude de rotation de la biellette est d'environ un demi-tour.

7. Mécanisme de déplacement selon l'une quelconque des revendications 2 à 6 **caractérisé en ce que** le guide courbe comprend un premier tronçon (11A) à faible pente incliné vers l'arrière et vers le bas, un second tronçon (11B) à pente plus accentuée vers le bas et l'arrière et un troisième tronçon (11C) a pente faible inclinée vers le bas et l'arrière.

8. Toit mobile comprenant au moins une partie avant et une partie arrière le dit toit étant pourvu d'un mécanisme de déplacement en vue de le ranger dans un logement **caractérisé en ce qu'**il est pourvu d'un mécanisme de déplacement (10) selon l'une quelconque des revendications précédentes.

9. Toit mobile selon la revendication 8 **caractérisé en ce que** le logement (7) destiné à recevoir le toit mobile en sa position rangée est fermé par un couvercle (5).

10. Toit mobile selon la revendication 9 **caractérisé en ce que** le couvercle (5) du logement du toit est articulé sur une traverse (9) sur laquelle est également articulé un second couvercle (6) d'une malle.

11. Toit mobile selon l'une quelconque des revendications 7 à 10 **caractérisé en ce qu'**il comprend une lunette arrière mobile escamotable.

12. Toit mobile selon l'une quelconque des revendications 7 à 11 **caractérisé en ce que** le mécanisme de déplacement du toit est articulé sur un axe fixe (13B) situé au voisinage d'une traverse (9) portant le couvercle (6) de la malle.
